(19) Europäisches Patentamt / European Patent Office / Office européen des brevets

(11) **EP 4 734 317 A1**

(12) **EUROPEAN PATENT APPLICATION**

(43) Date of publication:
**29.04.2026 Bulletin 2026/18**

(21) Application number: **25209364.6**

(22) Date of filing: **17.10.2025**

(51) International Patent Classification (IPC):
*H02J 3/28* (2026.01)   *C25B 1/04* (2021.01)
*H02J 3/34* (2026.01)   *H02J 3/38* (2026.01)
*H02J 15/00* (2026.01)  *H02J 15/50* (2026.01)

(52) Cooperative Patent Classification (CPC):
**H02J 3/28; C25B 1/04; H02J 3/34; H02J 3/381;
H02J 15/50;** H02J 2101/20; H02J 2101/24;
H02J 2101/30

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **22.10.2024 IT 202400023559**

(71) Applicant: **Hybitat S.r.l.
20122 Milano (IT)**

(72) Inventors:
• **BARDUCA, Loris
20122 Milano (IT)**
• **GIACOMELLI, Massimo
20122 Milano (IT)**

(74) Representative: **Caruti, Filippo et al
Thinx S.r.l.
P.le Luigi Cadorna, 10
20123 Milano (IT)**

(54) **METHOD OF CONTROLLING AN ELECTROLYZER AND RELATED ELECTRICITY GENERATION SYSTEM INCLUDING SAID ELECTROLYZER**

(57)    The present invention relates to a method (1000-2000) of controlling an electric energy generation plant (1). The plant comprises a unit for generating electric energy from a renewable energy source (2), an electrolyzer (51) for the generation of hydrogen, a battery (8) connected to the electrolyzer (51), at least one converter (3,4) adapted to supply an available power generated by the electric energy generation unit (2) to at least one of a load and the electrolyzer (51), a control system (6) for controlling the plant (1), and input means (7). The input means are adapted to acquire at least one of input information relating to the operation of the plant (1), meteorological information of a region in which the plant (1) is located and information relating to the operation of further plants located in the vicinity of the plant (1).

The method comprises that the control system performs the step of: monitoring (1002) the available power, generated by the renewable energy source (2), and when the available power falls below a threshold (1011), the method comprises that the control system performs the step of:
estimating (1014-1017) a recovery time interval at the end of which the available power will exceed the threshold,
determining (1014-1017) whether the battery is able to supply the electrolyzer (51) for said recovery time interval, and in the affirmative case, supplying (1012) the electrolyzer (51) by means of the battery (8).

In particular, the step of estimating a recovery time interval comprises for estimating the recovery time interval as a function of the at least one piece of input information, wherein the input information comprises at least one among a piece of information relating to the operation of the plant (1), a piece of meteorological information of a region in which the plant (1) is located and a piece of information relating to the operation of further plants located within a predetermined monitoring radius centred on the plant (1).

Fig.1

EP 4 734 317 A1

**Description**

**TECHNICAL FIELD**

The present invention refers to the field of energy. In more detail, the present invention relates to a method of controlling an electrolysis to produce hydrogen and a related electric energy generation plant comprised with a power-to-power system comprising the electrolyzer managed by the method.

**STATE OF THE ART**

Hydrogen is used as a carrier for energy storage. It can be generated sustainably through water electrolysis, using suitable electrolyzers supplied with energy from renewable sources. Once hydrogen is produced, it is stored and then made available in the form of electric energy thanks to the use of a fuel cell.

Power-to-power systems that use hydrogen as a carrier to store energy and then return it in the form of electric energy are on the market, but generally they are energy backup systems, used to comprise the necessary energy in the event of an electrical blackout.

Compared to storage systems based on lithium batteries, the advantage of hydrogen lies in its high energy density (and therefore the possibility of storing more energy in the same space). In addition, an energy storage based on hydrogen does not suffer from the "self-discharge" problem typical of lithium batteries. This therefore makes hydrogen the ideal energy carrier for storing large amounts of energy, not only for a daily, but also weekly or seasonal, energy independence.

Examples of known power-to-power systems are described in EP 4263908, US 8,795,481, US 10,169,832, CN 117353267 and FR 3051987. In particular, FR 3051987 presents a system that determines a power balance between an electrical power absorbed by a load and an electrical power comprised by an intermittent source. In addition, the system periodically receives information relating to the stability of the power balance with a constant safety period, based on this data, it controls the operation of the system so as to minimize the switching on of an electrochemical unit of the system when the power comprised by the intermittent power source is not sufficient to supply both the load and the electrochemical unit.

The Applicant has found that the known solutions do not permit to guarantee an optimal operation of the hydrogen generation systems in particular when supplied by intermittent and/or irregular energy sources such as systems for generating energy from renewable sources. In these cases, the electrolyzer is typically subject to repeated switching on and off, even during short time intervals, due to the fluctuation in the availability of energy from renewable sources, which reduces the efficiency and useful life thereof.

**OBJECTS AND SUMMARY OF THE INVENTION**

An object of the present invention is to overcome the drawbacks of the prior art.

In particular, it is an object of the present invention to comprise a method and a related electric energy generation plant capable of optimizing the operation of an electrolyzer of a power-to-power system comprised in the plant.

A further object of the present invention is to propose a method and a system for minimizing the switching on and off of the electrolyzer but at the same time ensuring correct and reliable operation of the plant.

These and other objects of the present invention are achieved by a system incorporating the features of the attached claims, which form an integral part of the present description.

According to a first aspect, the present invention is directed to a method of controlling an electric energy generation plant. The plant comprises a unit for generating electric energy from a renewable energy source, an electrolyzer for the generation of hydrogen, a battery connected to the electrolyzer, at least one converter adapted to supply an available power generated by the electric energy generation unit to at least one between a load and the electrolyzer, a control system for controlling the plant, and input means. The input means are adapted to acquire at least one piece of input information among a piece of information relating to the operation of the plant, a piece of meteorological information of a region in which the plant is located and a piece of information relating to the operation of further plants located in a region extending within a monitoring radius centred on the plant.

The method comprises the control system performing the steps of:

monitoring the available power, generated by the renewable energy source,
when the available power falls below a threshold:

estimating a recovery time interval at the end of which the available power will exceed the threshold,
determining whether the battery is able to supply the electrolyzer for said

recovery time interval, and

in the affirmative case, supplying the electrolyzer by means of the battery, wherein the step of estimating a recovery time interval comprises for estimating the recovery time interval as a function of at least one piece of information acquired by the input means.

Thanks to the method according to the present invention, repeated steps of switching the electrolyzer on and off due to fluctuations in the availability of energy are avoided, regardless of the frequency thereof. In particular, the method according to the present invention substantially limits unnecessary switching on and off even in the case of rapid fluctuations - that is, fluctuations having a reduced time duration over time, for example in the order of minutes or tens of minutes. Consequently, the components of the plant, in particular the electrolyzer, undergo reduced wear over time thanks to the method of the present invention which reduces the number of switching on and off cycles of the electrolyzer and of the electrical and/or hydraulic circuit components connected thereto. In other words, the method according to the present invention guarantees a greater robustness of the system and, in general, a greater useful life of the plant.

In one embodiment, the step of estimating a recovery time interval comprises that the control system executes a corresponding software algorithm adapted to estimate the time interval as a function of the received input information. In first embodiments, the software algorithm is deterministic, while in second embodiments the algorithm is probabilistic.

In one embodiment, the plant comprises a tank adapted to receive the hydrogen generated by the electrolyzer and hydrogen distribution means adapted to selectively distribute the hydrogen stored in the tank to at least one fuel cell. In addition, the distribution means allow to selectively deliver hydrogen stored in the tank to a different operating plant, for example a combustion heating plant.

For example, in one embodiment, the method comprises for determining a set of data relating to the trend over time of the availability of renewable energy, and training a machine learning algorithm to estimate the recovery time interval based on said data set. In this case, the step of estimating the recovery time interval comprises that the machine learning algorithm receives the at least one piece of the information acquired from the input means, and determines the recovery time interval estimate based on the at least one piece of the input information acquired from the input means.

In one embodiment, the machine learning algorithm comprises at least one selected from a Recurrent Neural Network (RNN), a Long Short-Term Memory (LSTM) model, Decision Trees Regression models - e.g. Random Forest or XGBoost -, hybrid models - e.g., Ensemble Learning -, and Gaussian Processes (GP).

In one embodiment, the threshold of the available power is equal to or greater than a minimum power capable of ensuring the operation of the electrolyzer. Further, the step of supplying the electrolyzer comprises for supplying the electrolyzer with a power substantially corresponding to the predetermined power for the recovery time interval.

In one embodiment, the method comprises calculating a maximum time interval for which the battery is able to supply the electrolyzer with a predetermined power, calculating a time period of limited availability of the energy comprised by the renewable energy source based on the input information. In this case, the step of determining whether the battery is able to supply the electrolyzer for said recovery time interval comprises for determining that the battery is able to supply the electrolyzer if the maximum time interval is equal to or greater than the limited energy availability interval.

In one embodiment, the method comprises calculating a maximum time interval for which the battery is able to supply the electrolyzer with a predetermined power based on the input information. Further, the step of determining whether the battery is able to supply the electrolyzer for said recovery time interval, comprises for comparing the maximum time and the recovery time, and determining that the battery is able to supply the electrolyzer if the recovery time interval is equal to or greater than the maximum time interval, or determining that the battery is unable to supply the electrolyzer if the recovery time interval is less than the maximum time interval.

In one embodiment, the step of calculating a maximum time interval comprises calculating the maximum time interval for which the battery is able to maintain operational the electrolyzer is equal to:

$$T_{eleonmax} = (C_{pmin} - N\%C_p)/P_{elemin},$$

where $T_{eleonmax}$ is the maximum time interval, $C_{pmin}$ is a predetermined minimum energy value of the battery, $C_p$ is the maximum value of energy that can be stored in the battery, N% indicates a percentage value of the maximum charge $C_p$ to be maintained in the battery, for example 10%, and $P_{elemin}$ is a minimum power value needed by the electrolyzer to operate.

In one embodiment, when it is determined that the battery is unable to supply the electrolyzer for the recovery time interval, it is comprised to deactivate the electrolyzer, determine whether the available power equals or exceeds said predetermined power, and in the affirmative case, supply the electrolyzer at the predetermined power.

In one embodiment, the method comprising the steps of determining an extension of the monitoring radius centred on the plant as a function of an amount of energy deliverable by the battery and of meteorological information comprised in the input information, and acquiring information relating to the operation of further plants comprised within the monitoring radius.

In one embodiment, the step of determining an extension of the monitoring radius comprises identifying a meteorological disturbance capable of reducing the available power of the unit for generating electric energy from a renewable energy source to or below a minimum value, calculating or estimating a displacement speed of the disturbance, and calculating a period of power time for which the battery is able to supply the electrolyzer. Finally, the extension, i.e. the length, of the monitoring radius is calculated as a function of the speed of the disturbance and the period of power time.

A different aspect of the invention relates to an electric energy generation plant. The plant comprises a unit for generating electric energy from a renewable energy source, an electrolyzer adapted to generate hydrogen, a battery connected to the electrolyzer, at least one converter adapted to supply an available power generated by the electric energy generation unit to at least one between a load and the electrolyzer, input means, and a control system for controlling the plant. In particular, the input means are adapted to acquire at least one piece of input information among a piece of information relating to the operation of the plant, a piece of meteorological information of a region in which the plant is located and a piece of information relating to the operation of further plants arranged within a monitoring radius centred on the plant.

Advantageously, the system for controlling the plant monitors the available power, generated by the electric energy generation unit. When the available power falls below a threshold, the control system estimates, as a function of the at least one piece of information acquired by the input means, a recovery time interval at the end of which the available power will exceed the threshold, determines whether the battery is able to supply the electrolyzer for said recovery time interval, and in the affirmative case supplies the electrolyzer by means of the battery.

The plant according to the present invention allows to obtain substantially the same advantages discussed above in relation to the various embodiments of the method presented.

Further features and purposes of the present invention will become more evident from the description below.

## BRIEF DESCRIPTION OF THE DRAWINGS

The invention will be described below with reference to some examples, comprised for explanatory and non-limiting purposes, and illustrated in the annexed drawings. These drawings illustrate different aspects and embodiments of the present invention and reference numerals illustrating structures, components, materials and/or similar elements in different drawings are indicated by similar reference numerals, where appropriate.

Figure 1 is a block diagram of an electric energy generation plant according to an embodiment of the present invention;

Figures 2-6 are block diagrams of the plant of Figure 1 operating according to different operating modes;

Figures 7A and 7B are a flowchart of a method of controlling the plant according to an embodiment of the present invention;

Figure 8 is a flowchart of a verification method according to an embodiment of the present invention; and

Figure 9 is a block diagram of an electric energy generation plant according to an alternative embodiment of the present invention.

## DETAILED DESCRIPTION OF THE INVENTION

Some preferred embodiments will be described in detail below, although the invention is susceptible to various alternative modifications. It must in any case be understood that there is no intention to limit the invention to the specific embodiment illustrated, but, on the contrary, the invention intends covering all the modifications, alternative and equivalent constructions that fall within the scope of the invention as defined in the claims.

Unless otherwise defined, all the terms of the art, notations and other scientific terms used herein are intended to have the meanings commonly understood by those skilled in the art to which this description belongs. In some instances, terms with commonly understood meanings are defined herein for clarity and/or ready reference; the inclusion of such definitions in the present disclosure is therefore not to be construed as representing a substantial difference from what is generally understood in the art.

The terms "comprising", "having", "including" and "containing" are to be understood as open-ended terms (i.e. the meaning "comprising, but not limited to") and are to be considered as a support also for terms such as "consist essentially of", "consist essentially of", "consist of" or "consist of".

The use of "for example", "etc.", "or" indicates non-exclusive alternatives without limitation, unless otherwise indicated. The use of "includes" means "includes, but not limited to" unless otherwise indicated.

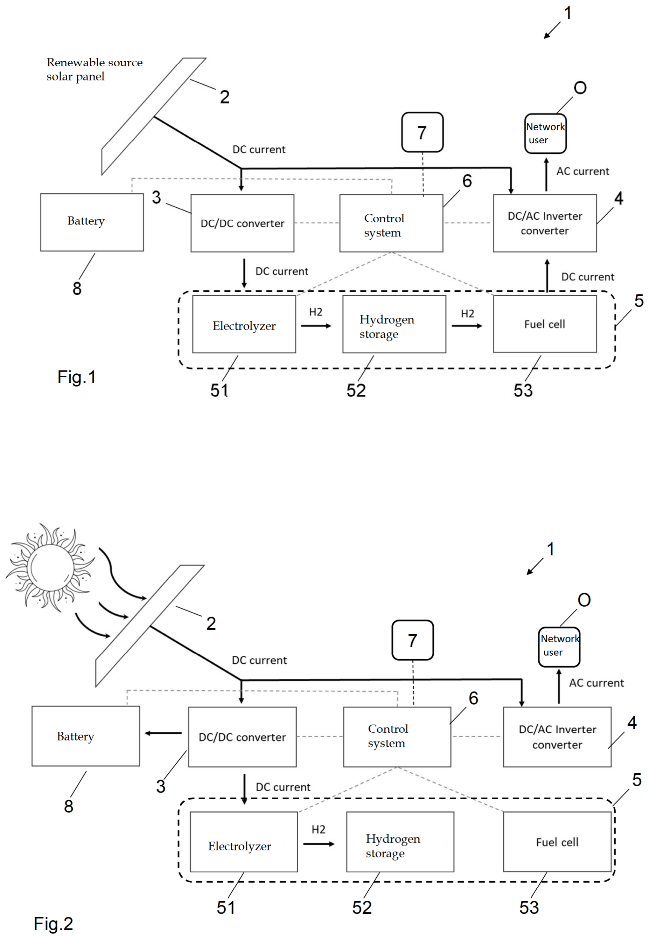

With reference to Fig.1, an electric energy generation plant or, more simply, plant 1 comprises one or more units for generating electric energy from a renewable energy source, a photovoltaic panel 2 in the example considered, one or more conversion units, a DC/DC converter 3 and a DC/AC converter 4 (or inverter) in the example of the Figures, a power-to-power system 5, and a control system 6.

Typically, but not in a limiting manner, the renewable energy source is of the intermittent type, i.e. with variable intensity over time *(e.g.,* solar irradiation, wind, wave motion, *etc.).* In the example in Figure 1, the power generation unit is a photovoltaic panel 2- in addition or alternatively, the generation unit may comprise wind turbines, hydroelectric systems, etc.

The power-to-power system 5 is an electric energy storage system (preferably renewable), in which hydrogen is used as an energy carrier. The power-to-power system 5 generates hydrogen ($H_2$) by means of electrolysis using the energy made available by the renewable source *(e.g.,* sun and/or wind). The hydrogen produced is stored and used to produce electric energy, when needed, for example when the renewable source is not available *(e.g.,* at night or in the absence of wind). In addition or alternatively, the hydrogen produced is used as a fuel in a heating system - for example, the hydrogen is burned in a boiler suitable for hydrogen combustion (not illustrated). In this case, the tank 52 is connected to a suitable hydraulic system (not illustrated) connected to the heating system.

To this end, the power-to-power system 5 comprises (at least) an electrolyzer 51, (at least) a tank 52 for storing the hydrogen produced, and (at least) a fuel cell 53. In a manner known per se, the electrolyzer uses the supplied electric energy to extract hydrogen from a mass of water ($H_2O$) through the electrolysis process, conversely, the fuel cell 53 produces electric energy by recombining hydrogen and oxygen.

In the example of Figures 1-6, the solar panel 2 is connected to the DC/DC converter 3 and the DC/AC converter 4. The DC/AC converter 4 is connected to a user and/or power grid O. Otherwise, the DC/DC converter 3 is connected to the electrolyzer 51. An output manifold of the electrolyzer 51 is connected to the tank 52 to receive the hydrogen extracted by the electrolyzer. In turn, the tank 52 is connected to an inlet manifold of the fuel cell 53 for supplying hydrogen thereto. The fuel cell 53 is connected to the DC/AC converter 4.

Furthermore, the plant 1 comprises or is connectable to a battery block 8. For example, the battery block 8 is connected to the control system 6 of the plant 1.

Finally, the control system 6 is connected to the DC/DC 3 and DC/AC 4 converters, the electrolyzer 51 and the fuel cell 53 of the power-to-power system 5 to manage its operation as described below. In general, the control system 6 comprises an electronic computer - *e.g.,* one or more of a microprocessor, a microcontroller, a PLC, an ASIC, an FPGA, a DSP, a GPU, etc. -, memory units - *e.g.,* of a volatile and non-volatile type -, ancillary circuits - *e.g.,* power circuitry, safety circuitry, etc. In addition, the control system 6 comprises, or is connected to, one or more sensors and/or data sources, collectively referred to as input means 7. A non-limiting example of sensors comprises temperature sensors, brightness sensors, pressure sensors, voltage and current meters, hydrogen gas detector sensors and oxygen gas detector sensors (for identifying gas leaks and/or other anomalies), etc., adapted to provide measurements of physical quantities indicative of the operation of the plant 1 and/or of the conditions of the environment in which the plant 1 is located. In particular, the control system 6 is adapted to acquire operating information of the solar panel 2, the electrolyzer 51, the fuel cell 53 and the battery 8, if present. A non-limiting example of data sources comprises weather forecasting services, satellite imaging services, a repository that stores the trend of electric energy absorption as a function of time by the user and one or more power generation plants - preferably, similar to the plant 1. - positioned within a predetermined monitoring radius centred on the plant 1

Preferably, the control system 6 is adapted to control the delivery of the electric energy comprised by the battery block 8 to one or more of the other elements of the plant 1, in particular, to the electrolyzer 51 of the power-to-power system 5.

With reference to Figures 1-6, the arrows exemplify flows of electric energy in different operating configurations of the plant 1. In the example of Figure 1, two paths are highlighted that can be travelled by the electric energy generated by the photovoltaic panel 2. In a first path, the electric energy is supplied to the DC/ AC converter 4 and from this to the user O. In the second path, the electric energy is supplied to the electrolyzer 51 which uses the energy to generate hydrogen. The hydrogen is then stored in the tank 52 for use by the fuel cell 53. Finally, the electric energy generated by the fuel cell 53 is transferred to the DC/AC converter 4 through which it is delivered to the user. In addition or alternatively, at least a part of the stored hydrogen is supplied to a different system (not illustrated) for example, the above-mentioned heating plant where the hydrogen is used as fuel to heat a carrier fluid *(e.g.,* water).

Figure 2 illustrates a first mode of operation of the plant 1. In the example, the photovoltaic panel 2 irradiated by the sun, produces electric energy in surplus with respect to the demand of the user O. The energy produced by the photovoltaic panel 2 is partly supplied to the DC/ AC converter 4 to be adapted to the mains voltage and delivered to the user O. The remaining part of the electric energy produced by the photovoltaic panel 2 is supplied to the electrolyzer 51. The hydrogen produced by electrolysis is finally stored in the tank 52. Possibly, part of the surplus of the electric energy produced by the photovoltaic panel 2 is supplied to the battery 8 to restore a state of charge thereof to a desired value (in a manner known per se and not described in detail here for the sake of brevity).

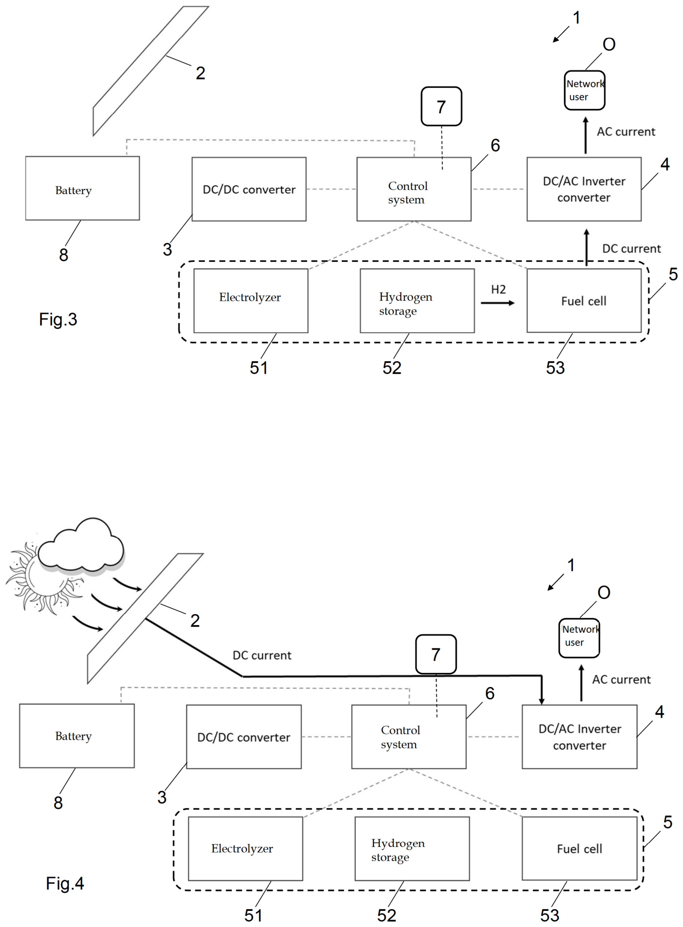

Otherwise, Figure 3 illustrates a second mode of operation of the plant 1. In the example, the photovoltaic panel 2 does not produce electric energy, as it is not irradiated by the sun - *e.g.*, at night. In this case, the hydrogen stored in the tank 52 is supplied to the fuel cell 53, which produces electric energy that is then supplied to the DC/AC converter 4 to be adapted to the mains voltage and delivered to the user O.

Figure 4 illustrates a third mode of operation of the plant 1. In the example, the photovoltaic panel 2 produces electric energy substantially equivalent to the demand of the user O. In other words, the energy surplus generated by the photovoltaic panel corresponds to a power lower than a minimum operating power of the electrolyzer 51. The energy produced by the photovoltaic panel 2 is completely supplied to the DC/AC converter 4 to be adapted to the mains voltage and delivered to the user O, while the electrolyzer 51 is deactivated.

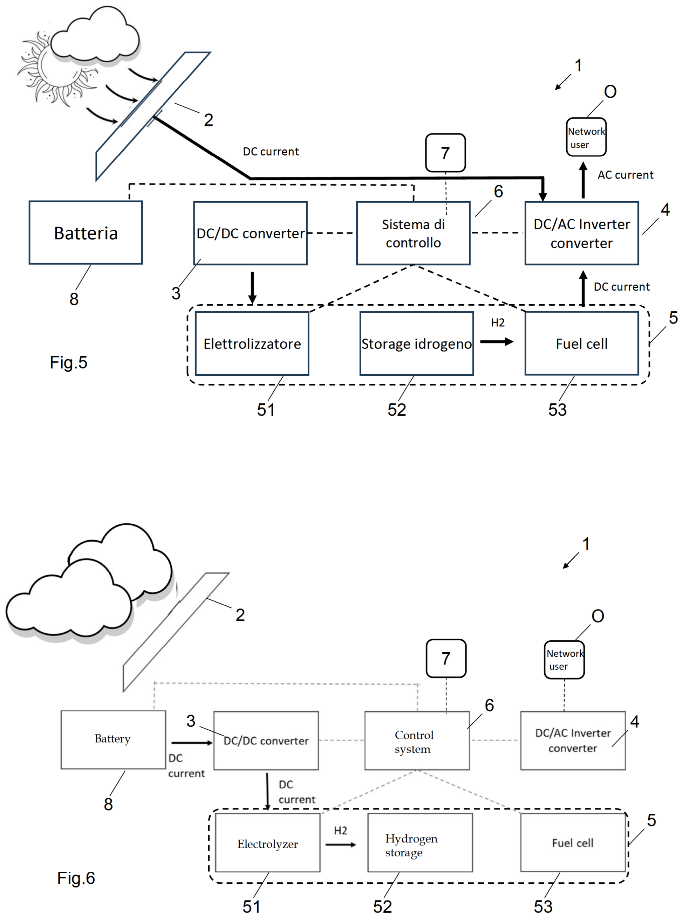

When the electric energy produced by the photovoltaic panel 2 is not sufficient not only to operate the electrolyzer 51, but also to meet the electric energy demand of the user O, the control system 6 activates the fuel cell 53 which, through the process reverse to electrolysis, generates electrical current by combining hydrogen, which it takes from the storage, with oxygen in a fourth mode of operation schematically illustrated in Figure 5.

Finally, Figure 6 illustrates a fifth mode of operation of the plant 1. In the example, the production of electric energy by the photovoltaic panel 2 is temporarily cancelled, or substantially reduced, for example in the case of a disturbance crossing a zone in which the plant 1 is positioned. In this case, the battery 8 supplies the electric energy needed for the correct operation of the electrolyzer 51 until the photovoltaic panel 2 resumes the supply to the electrolyzer 51 with a sufficient amount of electric energy for its operation.

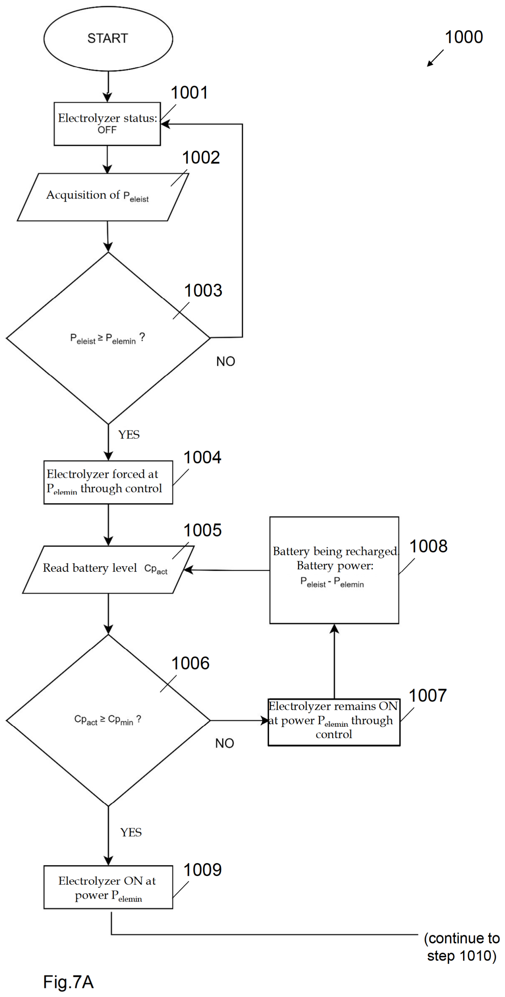

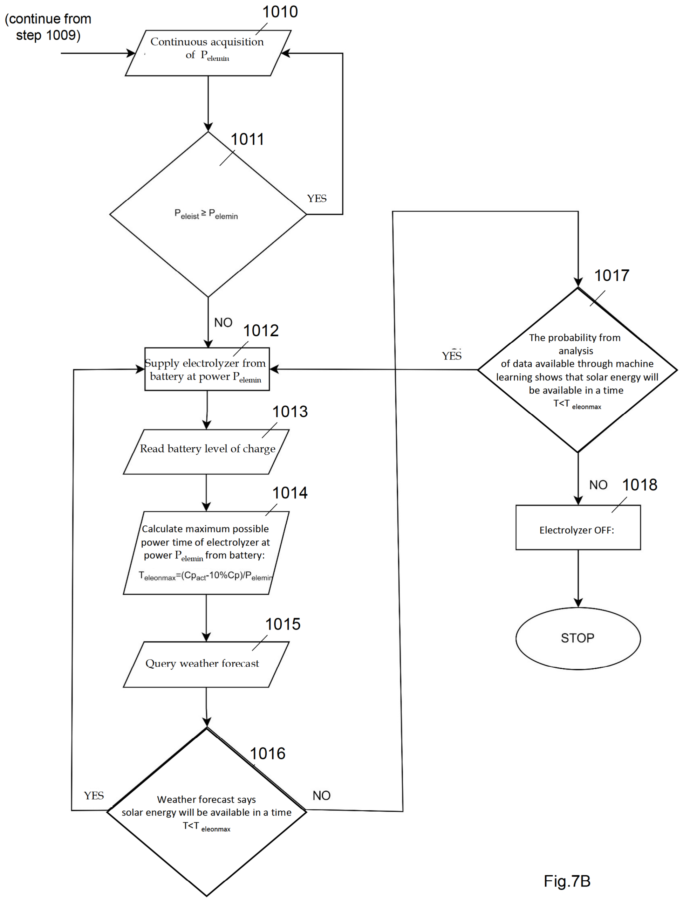

An example of control method 1000 performed by the control system 6 is illustrated by the flowchart in Figures 7A and 7B. In the example considered, at the start of the method 1000 the electrolyzer 53 is switched off (condition 1001).

The control system 6 determines the instantaneous power available to the electrolyzer - more briefly available power $P_{eleist}$ (step 1002). Preferably, the available power $P_{eleist}$ is given by the difference between the available power generated by the renewable source, or power produced $P_{PVist}$ by the photovoltaic panel 2 and the available power absorbed (that is, used) by the user, or power demand $P_{UTist}$:

$$P_{eleist} = P_{PVist} - P_{UTist} \qquad (1)$$

The control system 6 verifies whether the available power $P_{eleist}$ is greater than or equal to a minimum operating power of the electrolyzer, or minimum power $P_{elemin}$ (decision step 1003). The minimum power $P_{elemin}$ is defined as a function of an operating nominal power of the electrolyzer, or nominal power $P_{elenom}$. In general, the minimum power $P_{elemin}$ is lower than the nominal power $P_{elenom}$.

For example, an electrolyzer AEM Electrolyser EL 4.1 produced by Enapter S.r.l. has a nominal power $P_{elenom}$ equal to about 2.4 kW, which corresponds to a hydrogen production equal to 500 $Nm^3/h$, where the symbol Nm represents the unit of measurement normal cubic meter, i.e. the amount of hydrogen gas contained in one cubic meter under so-called 'normal' conditions, typically corresponding to a temperature of 0 °C and with a pressure of 1 atmosphere (101.325 kPa). In the above/considered example of the electrolyzer AEM Electrolyser EL 4.1, the minimum power $P_{elemin}$ is substantially equal to 60% of the nominal power $P_{elenom}$ ($P_{elemin} = 0.6 \cdot P_{elenom}$), i.e. equal to about 1.44 kW, corresponding to a production of 300 $Nm^3/h$ of hydrogen. As will be evident, the minimum power $P_{elemin}$ is a value dependent on the type of electrolyzer used and, possibly, on the specific operating requirements of the plant implemented.

When the available power $P_{eleist}$ is less than the minimum power $P_{elemin}$ (output branch NO of step 1003), the electrolyzer 51 remains in a switched off state, i.e. inactive (step 1001).

When the available power $P_{eleist}$ is greater than the minimum power $P_{elemin}$ (output branch YES of step 1003), the electrolyzer 51 is activated and set to operate at the minimum power $P_{elemin}$ (step 1004). In this mode of operation, the control system 6 manages the distribution of electric energy between the elements constituting the plant 1 and the user O.

During operation of the electrolyzer 51, an energy level $Cp_{act}$ currently stored in the battery 8 is monitored, e.g. periodically acquired (step 1005).

For example, a state of charge, or SOC, of the battery 8 is a data normally comprised by the battery 8 - *e.g.*, by a management system internal to the battery 8 itself, or BMS (Battery Management System). The SOC indicates the state of charge of the battery 8 as a percentage of the maximum energy level $C_p$ (in kWh) that can be stored by it. In other words, when SOC is equal to 100% the battery 8 stores an energy equal to the maximum energy level $C_p$. Consequently, the current energy level $C_{pact}$ is defined as:

$$Cp_{act} = SOC \cdot Cp / 100. \qquad (2)$$

Next, it is verified whether the energy level $Cp_{act}$ is equal to or greater than a minimum energy level $C_{pmin}$ (decision step 1006). In other words, the battery 8 is considered charged by the control system 6 when the stored energy level is at least equal to the minimum energy level $C_{pmin}$.

The minimum energy level $C_{pmin}$ can be set between the maximum energy level $C_p$ and a substantially zero minimum energy level ($0 \leq C_{pmin} \leq C_p$) and is preferably selected so as to keep the electrolyzer 51 switched on by means of the battery 8 itself, in the event of a lack of energy from a renewable source, for a maximum period of time $T_{eleonmax}$.

In particular, the maximum time $T_{eleonmax}$ is defined as the ratio between the electric energy available to the battery 8 and the minimum operating power $P_{elemin}$ of the electrolyzer 51. The electric energy available to the battery 8 can be defined as the difference between the minimum energy level $C_{pmin}$ and a background energy level stored by the battery 8, corresponding to a minimum level of charge to be maintained in the battery 8 - for example, necessary to ensure the longest service life of the battery 8 obtainable. Preferably, the minimum level of charge is defined as a percentage of the maximum energy level $C_p$. In the non-limiting example considered, the minimum level of charge is imposed equal to about 10% of the maximum energy level $C_p$. Summarizing, the maximum time $T_{eleonmax}$ for which the battery 8 is able to maintain operational the electrolyzer 51 is defined as:

$$T_{eleonmax} = (C_{pmin} - 10\% C_p)/P_{elemin}. \qquad (3)$$

Consequently, the minimum energy level $C_{pmin}$ can be defined as a function of the maximum time $T_{eleonmax}$ as:

$$C_{pmin} = T_{eleonmax} \cdot P_{elemin} + 10\% C_p. \qquad (4)$$

In a non-limiting embodiment, the minimum energy level $C_{pmin}$ is imposed around equal to 3 kWh and, given a maximum energy level $C_p$ equal to about 5 kWh, the minimum level of charge is equal to 0.5 kWh (0.5 kWh = 10% 5 kWh). Considering the minimum power $P_{elemin}$ of 1.44 kW, in the example reported above, the maximum time $T_{eleonmax}$ for which the battery 8 is able to maintain operational the electrolyzer 51 is equal to:

$$T_{eleonmax} = (3\ kWh - 0.5\ kWh)/1.44\ kW = 1.74\ h.$$

As will be apparent to the skilled person, by increasing the value of the minimum energy level $C_{pmin}$ (until the maximum energy level $C_p$ is reached) it is possible to increase the maximum time $T_{eleonmax}$ for which the battery 8 is able to maintain operational the electrolyzer 51.

Returning to method 1000, if the energy level $Cp_{act}$ is lower than the minimum energy level $C_{pmin}$ (output branch NO of step 1006), the electrolyzer 51 is maintained operational at the minimum power $P_{elemin}$ (step 1007) and the battery is recharged by means of the power generated by the solar panel 2 (step 1008). In this case, the battery 8 is charged by a power equal to the difference between the available power $P_{eleist}$ and the minimum power $P_{elemin}$ absorbed by the electrolyzer 51, namely:

$$P_{ch} = P_{eleist} - P_{elemin}. \qquad (5)$$

In other words, the power available in surplus, comprised by the photovoltaic panel 2, is diverted to the battery 8 to charge it up to the minimum energy level $C_{pmin}$, while the electrolyzer 51 remains switched on at its minimum power $P_{elemin}$.

Otherwise, if the energy level $Cp_{act}$ is equal to or greater than the minimum energy level $C_{pmin}$ (output branch YES of step 1006), the electrolyzer 51 is supplied with all the available power $P_{eleist}$ - without, of course, exceeding the nominal power $P_{elenom}$ (step 1009).

Next, the control system 6 monitors the available power $P_{eleist}$ available to the electrolyzer 51 (step 1010), and verifies whether the available power $P_{eleist}$ is greater than or at least equal to the minimum power $P_{elemin}$ (decision step 1011).

In the affirmative case (output branch YES of step 1011), the method is reiterated from step 1010 of monitoring the available power $P_{eleist}$.

In case, on the contrary, the available power $P_{eleist}$ is lower than the minimum power $P_{elemin}$ (output branch NO of step 1011), the electrolyzer 51 is supplied by the battery 8 (step 1012) with a predetermined power, for example, equal to the minimum power $P_{elemin}$. In addition, the current energy level $C_{pact}$ is detected (step 1013) and calculation is made of the maximum time $T_{eleonmax}$ for which the electrolyzer 51 can be maintained active at the current state of charge of the battery 8 by means of the formula (3) reported above (step 1014).

In series or in parallel, the information comprised by the input means 7 is analysed to estimate a recovery time interval, or recovery time T in brief of the solar irradiation on the solar panel 2 (step 1015) and it is verified whether the recovery time T is less than the maximum time $T_{eleonmax}$ for which the battery 8 is able to maintain operational the electrolyzer 51 (decision step 1016). Preferably, the recovery time T is determined at least based on the acquired meteorological data. Preferably, the information comprised by the input means comprises meteorological nowcasting information - that is, information generated by a weather forecasting service focused on the short term, generally covering a period of time ranging from a few minutes up to about six hours and based on data collected in real time. Advantageously, the meteorological nowcasting information acquired comprises meteorological data relating to an area centred on the plant 1.

In the affirmative case (output branch YES of step 1016), the electrolyzer 51 is maintained operational, preferably at the minimum power $P_{elemin}$, while it is supplied by the battery 8, i.e. the method 1000 returns to step 1012.

If, on the other hand, the level of charge of the battery 8 does not allow the electrolyzer 51 to be maintained switched on for the recovery time T (output branch NO of step 1016), it is verified again whether the recovery time T is expected in a time less than the maximum time $T_{eleonmax}$ (decision step 1017). To this end, the control system executes a corresponding software algorithm adapted to estimate the time interval as a function of the input information received. The software algorithm is of deterministic type or probabilistic type. In the example considered, a probabilistic analysis is performed based on the information comprised by the input means 7. Advantageously, the probabilistic analysis is based on a history of data acquired and processed with artificial intelligence techniques, in particular comprising one or more machine learning, ML, algorithms.

In the affirmative case (output branch YES of step 1017), the electrolyzer 51 is maintained operational, preferably at the minimum power $P_{elemin}$, while it is supplied by the battery 8, i.e. the method 1000 returns to step 1012.

In the negative case (output branch NO of step 1017), the conditions to maintain the electrolyzer 51 active are not met, which is deactivated (step 1018).

Thanks to the management by means of the method 1000 it is possible to minimize the switching on and off cycles of the electrolyzer 51 thus maintaining an optimal condition to prolong the useful life thereof.

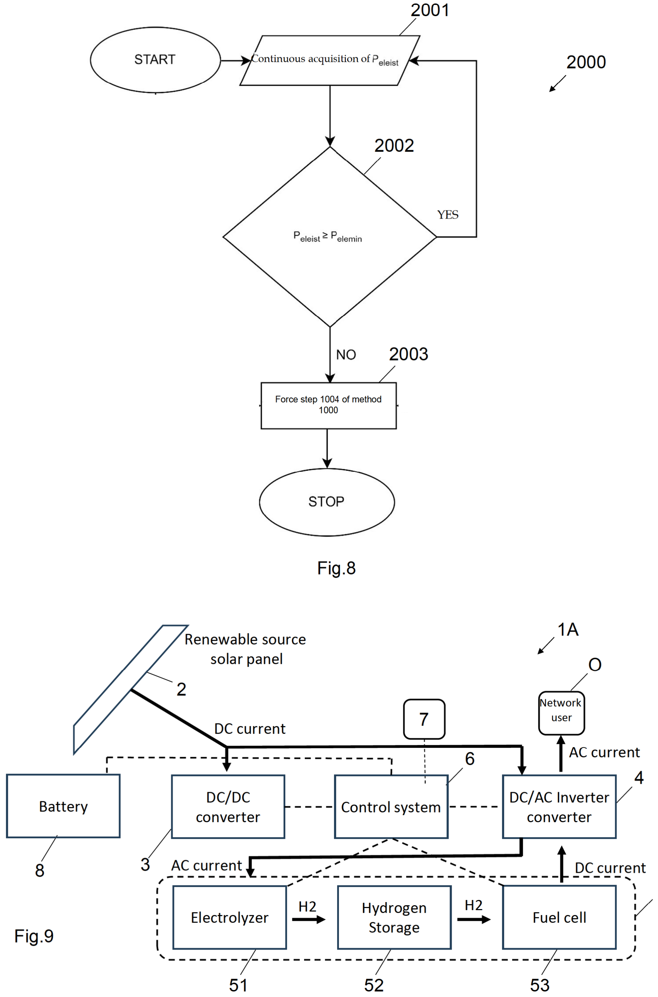

Preferably, in parallel with steps 1012-1018 of the method 1000 the control system 6 performs a verification method 2000, illustrated by the flowchart of Figure 8. The method 2000 comprises that the control system 6 monitors the power level generated by the photovoltaic panel 2 to detect a possible availability of available power $P_{eleist}$ sufficient to supply the electrolyzer 51 (decision step 2002). In the negative case (output branch NO of step 2002) monitoring the power generated by the photovoltaic panel 2 is meant to continue. Conversely, if the available power $P_{eleist}$ is sufficient to supply the electrolyzer 51 (output branch YES of step 2002), it is comprised to force the reiteration of the method 1000 to operate from step 1004, i.e. the electrolyzer 51 is activated and is set to operate at the minimum power $P_{elemin}$.

Furthermore, the ML algorithm that performs the probabilistic analysis is trained as described below. Initially, an irradiation map is generated, which indicates a trend of solar irradiation that hits the photovoltaic panel 2 of the plant 1 as a function of time. In particular, the irradiation map is generated from a plurality of historical irradiation information - obtained from one or more meteorological services - and from structural data of the photovoltaic panels 2 - *e.g.,* geographical position, orientation, angle with respect to the ground, active surface, etc. Advantageously, the historical irradiation information refers to a period of time adapted to allow to model seasonal trends of solar irradiation at the photovoltaic panel *(e.g.,* the irradiation information concerns a period of time greater than or equal to one year). The irradiation map is used as a training data set by the ML algorithm. Non-limiting examples of ML algorithms suitable for the application comprise one or more of a Recurring Neural Network (RNN), a Long Short-Term Memory (LSTM) model, Decision Trees Regression models-e.g. Random Forest or XGBoost -, hybrid models - e.g., Ensemble Learning -, and Gaussian Processes (GP).

Advantageously, although in a non-limiting manner, the plant is adapted to perform a continuous training procedure adapted to optimize a training data set and a prediction reliability of the ML algorithm performing the probabilistic analysis. In one embodiment, during operation, the plant is configured to identify irradiation map discrepancies and irradiation conditions actually measured - or inferred from measurements of other characteristics of the plant. For each discrepancy identified, one or more parameters are stored - *e.g.,* duration and intensity of the deviation - and used to build one or more data sets of corrective values used to retrain the ML algorithm to obtain greater accuracy of the predictions comprised by the ML algorithm. Alternatively, the plant is configured to determine new irradiation information from the trend of the electric energy production of the photovoltaic panel 2 as a function of time. The new irradiation information is added to the training data set to refine the performance of the ML algorithm. Optionally, the new irradiation information is weighed with a first weight, in general, different from a second weight with which the original irradiation information of the training data set is weighed. For example, the first weight is greater than the second weight.

However, it is clear that the above examples must not be interpreted in a limiting manner and the invention thus conceived is susceptible of numerous modifications and variations.

In alternative embodiments (not illustrated), the plant comprises more than one converter of energy from renewable sources. For example, the plant comprises more than one photovoltaic panel, one or more wind turbines and/or a combination of photovoltaic panels and wind turbines.

In particular, in the case of a plant comprising wind turbines, a ML algorithm is comprised which is trained to start from a data set that comprises a plurality of information on the trend in the winds as a function of time, at the plant 1. In addition or alternatively to what is described above, even in the case of probabilistic analysis of the wind trend, continuous training procedures similar to those described above can be comprised *mutatis mutandis,* i.e., with the creation of a map of the winds that affect the wind turbines as a function of time - comprising data collected over a period of time, preferably greater than a periodicity of any cyclical (e.g., seasonal) trends in the winds. More generally, it is comprised to determine a respective map of the trend over time of the availability of the renewable energy source (e.g., solar irradiation, wind, river current, tides, *etc.*). In other words, each map comprises a set of energy source data, which are indicative of the trend over time of the availability of energy supplied by the renewable energy source considered on a region of space corresponding, or at least comprising, the plant. Advantageously, the information comprised in each data set relates to a longer time interval, more preferably much longer, than the trend of periodic variations in the availability of energy supplied by the renewable energy source considered.

As will be evident to the person skilled in the art, in the event that the plant comprises several electrical energy sources (*e.g.*, photovoltaic panels, wind turbines, etc.) the available energy is given by the sum of the energy generated by the electrical energy sources of the plant.

In addition or alternatively, the plant may be adapted to deliver electric energy/hydrogen to more than one user.

In one embodiment, the monitoring radius within which the trend of one or more other energy generation plants is analysed is determined by identifying one or more types of clouds (stratus, nimbus, cumulus clouds, etc.), or more generally disturbances, capable of attenuating solar irradiation in the case of the photovoltaic panel 2 at or below a minimum value of the electrical power produced by the solar panel 2. Thereafter, an average speed of such clouds is calculated or estimated. In addition, a period of power time is established for which the battery 8 is able to supply the electrolyzer 51, which depends on the charge accumulated in the battery 8 and the minimum operating power of the electrolyzer 51. Finally, the monitoring radius is identified as the space travelled by the disturbance at the calculated/estimated speed in a time interval equal to the period of power time. For example, the electrolyzer AEM Electrolyser EL 4.1, mentioned above, has a minimum power $P_{elemin}$ equal to about 1.44 kW. Considering, moreover, a battery with a capacity of 5 kWh it is possible to guarantee the operation of the electrolyzer 51 for about 3 hrs at the minimum power $P_{elemin}$, maintaining a minimum residual charge in the battery. In this case, low-altitude clouds and speeds are expected - e.g., an average speed of about 10 km/h - based on the meteorological data acquired. Accordingly, the monitoring radius is calculated in 30 km in the calculated example. Preferably, the monitoring radius is calculated periodically, so as to adapt the monitoring radius to the territorial extension over which information is collected as a function of atmospheric conditions. In a simplified embodiment, the monitoring radius is fixed and is calculated on average wind speed values in the region where the plant is located.

In simplified embodiments, the probabilistic analysis performed to calculate the time to recover normal operating conditions is based on a reduced set of input information. In particular, an irradiation map can be determined by considering at least one piece or a subset of the types of input information obtained from the plant (e.g., meteorological data, plant generation data, plant generation data within the predetermined radius). For example, in a first embodiment the input information exclusively comprises meteorological data, in a second embodiment the input information exclusively comprises information relating to the trend of power generation over time of the plant and/or of one or more other plants arranged within a predetermined radius of the plant.

In more complex embodiments, all types received are used, possibly weighed, to determine the recovery time more effectively. Optionally, the plant is adjustable to select a quantity and/or type of data used for probabilistic analysis as a function of contingent conditions, for example in case of high meteorological variability more and/or more types of input information are used in order to determine a reliable recovery time.

In the alternative embodiment of Figure 9, the electrolyzer 51 of the plant 1A is powered by an alternating current, which is comprised by the DC/AC converter 4 that converts the electric energy comprised by the photovoltaic panel 2 from direct current to alternating current. In this case, the battery 8 will be connected to the DC/ AC converter 4 so as to allow the electrolyzer 51 to be powered when needed, in a manner analogous to that described above.

As will be apparent to the person skilled in the art, one or more steps of the above-described methods may be performed in parallel with each other or in an order different from the one presented above. Similarly, one or more optional steps may be added to or removed from one or more of the methods described above.

Naturally, all the details can be replaced with other technically-equivalent elements.

In conclusion, the materials used, as well as the shapes and contingent dimensions of the devices, apparatus and terminals mentioned above, may be any according to the specific implementation needs without thereby departing from the scope of protection of the following claims.

## Claims

1. Method (1000-2000) of controlling an electric energy generation plant (1) comprising:

   a unit for generating electric energy from a renewable energy source (2),
   an electrolyzer (51) for hydrogen generation,
   a battery (8) connected to the electrolyzer (51),
   at least one converter (3,4) adapted to supply an available power generated by the electric energy generation unit (2) to at least one of a load and the electrolyzer (51),
a control system (6) for controlling the plant (1),
input means (7) adapted to acquire at least one piece of input information,
wherein the method comprises having the control system performing the step of:

monitoring (1002) the available power, generated by the renewable energy source (2),
**characterized in that**
when the available power falls below a threshold (1011), the method comprises having the control system performing the steps of:

estimating (1014-1017) a recovery time interval at the end of which the available power will exceed the threshold,
determining (1014-1017) whether the battery is able to supply the electrolyzer (51) for said recovery time interval, and
in the affirmative case, supplying (1012) the electrolyzer (51) by means of the battery (8),

wherein the step of estimating a recovery time interval comprises estimating the recovery time interval as a function of the at least one piece of input information, wherein the at least one piece of input information comprises at least one among a piece of information relating to the operation of the plant (1), a piece of meteorological information of a region in which the plant (1) is located and a piece of information relating to the operation of further plants located within a monitoring radius centred on the plant (1).

2. Method (1000-2000) according to claim 1, wherein the control module further performs the steps of:

determining a set of data relating to the trend over time of the availability of renewable energy, and
training a machine learning algorithm to estimate the recovery time interval based on said data set, and
wherein the step of estimating the recovery time interval comprises that the machine learning algorithm:

receives at least one piece of information acquired by the input means (7), and
determines the recovery time interval estimate based on the at least one piece of the input information acquired by the input means (7).

3. Method (1000-2000) according to claim 1 or 2, wherein said threshold of the available power is equal to or greater than a minimum power capable of ensuring the operation of the electrolyzer (51), and
wherein the step of supplying the electrolyzer (51) comprises:
supplying the electrolyzer (51) with a power substantially corresponding to the predetermined power for the recovery time interval.

4. Method (1000-2000) according to any one of the preceding claims, comprising:

calculating a maximum time interval for which the battery (8) is able to supply the electrolyzer (51) with a predetermined power,
calculating a time period of limited availability of the energy supplied by the renewable energy source based on the piece of input information, and
wherein the step of determining whether the battery is able to supply the electrolyzer (51) for said recovery time interval comprises:
determining that the battery is able to supply the electrolyzer (51) if the maximum time interval is equal to or greater than the limited energy availability interval.

5. Method (1000-2000) according to any one of the preceding claims, comprising:

calculating a maximum time interval for which the battery (8) is able to supply the electrolyzer (51) with a predetermined power based on the piece of input information, and
wherein the step of determining whether the battery is able to supply the electrolyzer (51) for said recovery time interval comprises:

comparing the maximum time and the recovery time, and
determining that the battery (8) is able to supply the electrolyzer (51) if the recovery time interval is equal to or greater than the maximum time interval, or determining that the battery (8) is unable to supply the electrolyzer (51) if the recovery time interval is less than the maximum time interval.

6. Method (1000-2000) according to claim 5, wherein the step of calculating a maximum time interval comprises calculating the maximum time interval for which the battery (8) is able to maintain operational the electrolyzer (51) as equal to:

$$T_{eleonmax} = (C_{pmin} - N\%C_p)/P_{elemin,}$$

where $T_{eleonmax}$ is the maximum time interval, $C_{pmin}$ is a predetermined minimum energy value of the battery (8), $C_p$ is the maximum value of energy that can be stored in the battery (8), N% indicates a percentage value of the maximum charge $C_p$ to be maintained in the battery (8) and $P_{elemin}$ is a minimum value of power needed by the electrolyzer (51) to operate.

7. Method (1000-2000) according to any one of the preceding claims, wherein, when it is determined that the battery (8) is unable to supply the electrolyzer (51) for the recovery time interval, comprises:

deactivating the electrolyzer (51);
determining whether the available power equals or exceeds said predetermined power, and
in the affirmative case, supplying the electrolyzer (51) at the predetermined power.

8. Method (1000-2000) according to any one of the preceding claims, further comprising the step of

determining an extension of the monitoring radius centred on the plant as a function of an amount of energy deliverable by the battery (8) and of meteorological information comprised in the piece of input information (7), and acquiring information relating to the operation of further plants comprised in the monitoring radius.

9. Method (1000-2000) according to claim 8, wherein the step of determining an extension of the monitoring radius comprises:

identifying a meteorological disturbance capable of reducing the available power of the unit for generating electric energy from a renewable energy source (2) to, or below, a minimum value,
calculating or estimating a movement speed of the disturbance,
calculating a supply time period for which the battery (8) is able to supply the electrolyzer (51), and
calculating the extension of the monitoring radius as a function of the speed of the disturbance and the supply power period.

10. Electric energy generation plant (1; 1A) comprising:

a unit for generating electric energy (2) from a renewable energy source,
an electrolyzer (51) adapted to generate hydrogen,
a battery (8) connected to the electrolyzer (51),
at least one converter (3,4) adapted to supply an available power generated by the electric energy generation unit (2) to at least one between a load and the electrolyzer (51),
input means (7) adapted to acquire at least one piece of input information, and a control system (6) for controlling the plant (1),
**characterized in that**
the control system (6):

monitors the available power, generated by the electric energy generation unit (2),
when the available power falls below a threshold (1011):

estimates, as a function of the at least one piece of input information acquired by the input means (7), a recovery time interval at the end of which the available power will exceed the threshold,
determines (1014-1017) whether the battery is able to supply the electrolyzer (51) for said recovery time interval, and
in the affirmative case, supplies (1012) the electrolyzer (51) by means of the battery (8),

wherein the piece of input information comprises at least one among a piece of information relating to the operation of the plant (1), a piece of meteorological information of a region in which the plant (1) is located and a piece of information relating to the operation of further plants located within a predetermined monitoring radius centred on the plant (1).

Fig.1

Fig.2

Fig.3

Fig.4

Fig.5

Fig.6

**START**

1001

Electrolyzer status:
OFF

1002

Acquisition of $P_{eleist}$

1003

$P_{eleist} \geq P_{elemin}$ ?

NO

YES

1004

Electrolyzer forced at
$P_{elemin}$ through control

1005

Read battery level $Cp_{act}$

1008

Battery being recharged
Battery power:
$P_{eleist} - P_{elemin}$

1006

$Cp_{act} \geq Cp_{min}$ ?

NO

1007

Electrolyzer remains ON
at power $P_{elemin}$ through
control

YES

1009

Electrolyzer ON at
power $P_{elemin}$

(continue to
step 1010)

1000

Fig.7A

(continue from
step 1009)

**1010**
Continuous acquisition
of $P_{elemin}$

**1011**
$P_{eleist} \geq P_{elemin}$

YES

NO

**1012**
Supply electrolyzer from
battery at power $P_{elemin}$

**1013**
Read battery level of charge

**1014**
Calculate maximum possible
power time of electrolyzer at
power $P_{elemin}$ from battery:

$T_{eleonmax}=(Cp_{act}-10\%Cp)/P_{elemin}$

**1015**
Query weather forecast

**1016**
Weather forecast says
solar energy will be available in a time
$T<T_{eleonmax}$

YES

NO

**1017**
The probability from
analysis
of data available through machine
learning shows that solar energy will
be available in a time
$T<T_{eleonmax}$

YES

NO **1018**
Electrolyzer OFF:

STOP

Fig.7B

Fig.8

Fig.9

# EUROPEAN SEARCH REPORT

**Application Number**

EP 25 20 9364

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FR 3 051 987 A1 (CENTRE NATIONAL DE LA RECHERCHE SCIENT (CNRS) [FR] ET AL.) 1 December 2017 (2017-12-01) | 1-7,10 | INV. H02J3/28 C25B1/04 |
| A | * abstract * <br> * claims 1,8,9,10,11,13 * <br> * claims 2-7 * <br> * figure 2 * <br> * page 1, lines 7-21 * <br> * page 5, lines 29-30 * <br> * page 7, lines 17-29 * <br> * page 8, lines 8-13 * <br> * page 9, lines 9-13,20-22 * <br> * page 10, lines 25-29 * <br> * page 8, line 34 - page 9, line 5 * <br> * page 12, lines 9-31 * <br> ----- | 8,9 | H02J3/34 H02J3/38 H02J15/00 H02J15/50 |
| A | EP 4 283 813 A1 (HITACHI LTD [JP]) 29 November 2023 (2023-11-29) <br> * abstract * <br> * claims 1,7 * <br> * figures 2,5 * <br> * paragraphs [0023] - [0053] * <br> ----- | 1-10 | |
| A | IT 2022 0002 7270 A1 (BLUENERGY REVOLUTION SOC COOPERATIVA [IT]) 30 June 2024 (2024-06-30) <br> * claims 3-7 * <br> ----- | 1-10 | **TECHNICAL FIELDS SEARCHED (IPC)** <br> H02J <br> C25B |
| A | US 2022/285938 A1 (MEHTA SANJAY [US] ET AL) 8 September 2022 (2022-09-08) <br> * abstract * <br> * claims 1-20 * <br> * paragraphs [0129] - [0136], [0205] - [0211] * <br> ----- | 1-10 | |

The present search report has been drawn up for all claims

| Place of search | Date of completion of the search | Examiner |
|---|---|---|
| Munich | 4 February 2026 | Fiat, Cyrille |

## ANNEX TO THE EUROPEAN SEARCH REPORT
## ON EUROPEAN PATENT APPLICATION NO.

EP 25 20 9364

This annex lists the patent family members relating to the patent documents cited in the above-mentioned European search report.
The members are as contained in the European Patent Office EDP file on
The European Patent Office is in no way liable for these particulars which are merely given for the purpose of information.

04-02-2026

| Patent document cited in search report | | Publication date | Patent family member(s) | | Publication date |
|---|---|---|---|---|---|
| FR 3051987 | A1 | 01-12-2017 | CN | 109196748 A | 11-01-2019 |
| | | | EP | 3465861 A1 | 10-04-2019 |
| | | | FR | 3051987 A1 | 01-12-2017 |
| | | | JP | 7046010 B2 | 01-04-2022 |
| | | | JP | 2019518407 A | 27-06-2019 |
| | | | US | 2020328440 A1 | 15-10-2020 |
| | | | WO | 2017207910 A1 | 07-12-2017 |
| EP 4283813 | A1 | 29-11-2023 | EP | 4283813 A1 | 29-11-2023 |
| | | | JP | 7749512 B2 | 06-10-2025 |
| | | | JP | 2023172003 A | 06-12-2023 |
| IT 202200027270 | A1 | 30-06-2024 | ------------------------------------ | | |
| US 2022285938 | A1 | 08-09-2022 | AU | 2022201356 A1 | 22-09-2022 |
| | | | AU | 2024200089 A1 | 25-01-2024 |
| | | | BR | 102022003671 A2 | 25-04-2023 |
| | | | CA | 3150613 A1 | 05-09-2022 |
| | | | CL | 2022000528 A1 | 18-11-2022 |
| | | | CN | 115034424 A | 09-09-2022 |
| | | | EP | 4053652 A1 | 07-09-2022 |
| | | | SA | 122430733 B1 | 05-10-2024 |
| | | | US | 2022285938 A1 | 08-09-2022 |
| | | | US | 2023178984 A1 | 08-06-2023 |
| | | | ZA | 202202469 B | 26-11-2025 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4263908 A
- US 8795481 B
- US 10169832 B
- CN 117353267
- FR 3051987